# EUROPEAN PATENT APPLICATION

(11) **EP 4 122 326 A1**
(43) Date of publication of application: **25.01.2023**
(21) Application number: 21771712.3
(22) Date of filing: 04.03.2021
(51) Int. Cl.: A23L 3/3436, B01D 53/14, B01J 20/02, B01J 20/28, B01J 20/30

(54) **OXYGEN SCAVENGER COMPOSITION**

(30) Priority: 19.03.2020 JP 2020049572
(71) Applicant: MITSUBISHI GAS CHEMICAL COMPANY, INC., Chiyoda-ku Tokyo 100-8324 (JP)
(72) Inventor: SATO, Daiki, Tokyo 125-8601 (JP); INOUE, Atsushi, Tokyo 125-8601 (JP)
(74) Representative: Hoffmann Eitle
(86) International application number: PCT/JP2021/008399
(87) International publication number: WO 2021/187130

(57) **Abstract**

An oxygen scavenger composition comprising a water retention agent, a swelling agent, an ammonium salt, water, and iron.

## Description

### Technical Field

The present invention relates to an oxygen scavenger composition.

### Background Art

A method of using an oxygen scavenger is known as a storage technique for food products, pharmaceutical products, and the like. In this method, an article to be stored and the oxygen scavenger are enclosed and sealed in a sealed container having a gas-barrier properties, thereby allowing the oxygen scavenger to absorb oxygen in the sealed container. Thus, an atmosphere in the sealed container can be kept substantially in an oxygen-free state. As a required function, the oxygen scavenger must be small in size and can absorb oxygen in large quantities. In other words, an oxygen scavenger composition with a large amount of oxygen absorption per unit volume is required.

Exemplary oxygen scavengers include: iron-based oxygen scavengers that include iron (iron powder) as their main agent; and non-iron-based oxygen scavengers that include ascorbic acid, glycerin, and the like as their main agents. The oxygen scavenger is appropriately selected according to the intended use, but an iron-based oxygen scavenger is widely used from the viewpoint of oxygen absorption performance.

In such circumstances, there has been an attempt to reduce the size of an iron-based oxygen scavenger and improve the amount of oxygen absorption thereof.

For example, Patent Document 1 discloses an oxygen scavenger composition that includes an oxygen absorbing substance, water, and a swelling agent, and is pressure-molded into a solid form to eliminate gaps between powdery/granular material, thereby achieving a reduced volume and a compact size.

For the purpose of providing an oxygen scavenger composition which has an excellent amount of oxygen absorption, Patent Document 2 discloses an oxygen scavenger composition including a powdery/granular material that has: an α layer containing a water retention agent, a swelling agent, a metal salt, and water; a β layer containing iron; and a γ layer containing a porous carrier, wherein the powdery/granular material forms a layer structure in the order of the α, β, and γ layers from an inner side to an outer side of the powdery/granular material.

### Citation List

### Patent Documents

Patent Document 1: WO 2007/046449
Patent Document 2: WO 2017/169015

### Summary of Invention

### Technical Problem

With the diversification of packaging for food products, pharmaceutical products, and the like, it is desired to reduce the size of an oxygen scavenger. However, when the size of the oxygen scavenger is reduced, its contact area with a space inside a container tends to be limited. This causes a problem in that the absorption of oxygen takes time.

From the viewpoint of ensuring a degree of freedom of the shape of the oxygen scavenger and preventing an article to be stored within a sealed container from undergoing oxidation, there is a demand for an oxygen scavenger composition for use in an iron-based oxygen scavenger, which has a high oxygen absorption rate and absorbs oxygen within the sealed container in a short period of time.

Therefore, an object of the present invention is to provide an oxygen scavenger composition having an extremely high oxygen absorption rate.

### Solution to Problem

As a result of diligent studies in view of the above problems, the present inventors have found that the iron-based oxygen scavenger composition can solve the above problems due to inclusion of a water retention agent, a swelling agent, an ammonium salt, and water, and completed the present invention.

The present invention relates to an oxygen scavenger composition which will be described below.
<1> An oxygen scavenger composition containing a water retention agent, a swelling agent, an ammonium salt, water, and iron.
<2> The oxygen scavenger composition according to <1>, wherein the ammonium salt contains at least one selected from the group consisting of ammonium halide and ammonium sulfate.
<3> The oxygen scavenger composition according to <1> or <2>, wherein the water retention agent contains at least one selected from the group consisting of diatomaceous earth, silica, and activated carbon.
<4> The oxygen scavenger composition according to any one of <1> to <3>, wherein the swelling agent contains at least one selected from the group consisting of carboxymethylcellulose calcium, carboxymethylcellulose sodium, calcium bentonite, and sodium bentonite.
<5> The oxygen scavenger composition according to any one of <1> to <4>, wherein the oxygen scavenger composition contains a mixed granule of a composition that contains a water retention agent, a swelling agent, an ammonium salt, water, and iron.
<6> The oxygen scavenger composition according to <5>, wherein the oxygen scavenger composition has a layer containing porous particles on an outside of the mixed granule.
<7> The oxygen scavenger composition according to <5> or <6>, wherein the mixed granule is not a pressure-molded product.
<8> The oxygen scavenger composition according to any one of <5> to <7>, wherein iron is dispersed throughout the entire mixed granule.
<9> The oxygen scavenger composition according to any one of <1> to <8>, wherein the oxygen scavenger composition has an average particle size of 0.3 mm or more and 5.0 mm or less.
<10> The oxygen scavenger composition according to any one of <1> to <9>, wherein the oxygen scavenger composition has a bulk density of 1.0 g/mL or more and 2.5 g/mL or less.
<11> The oxygen scavenger composition according to any one of <1> to <10>, wherein the oxygen scavenger composition has a substantially spherical or spherical shape.
<12> The oxygen scavenger composition according to any one of <2> to <11>, wherein the ammonium halide contains at least one selected from the group consisting of ammonium chloride and ammonium bromide.
<13> A method for producing an oxygen scavenger composition, the method including collectively mixing a water retention agent, a swelling agent, an ammonium salt, water, and iron for granulation.
<14> An oxygen scavenger package including the oxygen scavenger composition according to any one of <1> to <12> and an air-permeable packaging material in which the oxygen scavenger composition is contained.

### Advantageous Effects of Invention

The oxygen scavenger composition of the present invention has an extremely high oxygen absorption rate and is capable of absorbing oxygen in a short period of time.

### Description of Embodiments

An embodiment according to the present invention will be described below. The content of the present invention is not limited to the embodiment described below.

Note that in the present specification, a phrase of "A to B" indicating a numerical range means "more than or equal to A and less than or equal to B" (in the case of A < B), or "less than or equal to A and more than or equal to B" (in the case of A > B). Furthermore, in the present invention, a combination of preferable aspects is a more preferable aspect.

### [Oxygen scavenger composition]

An oxygen scavenger composition of the present invention contains a water retention agent, a swelling agent, an ammonium salt, water, and iron.

The oxygen scavenger composition the present invention is not particularly limited in terms of its shape and production method, as long as it contains a water retention agent, a swelling agent, an ammonium salt, water, and iron, but preferably contains a mixed granule of a composition containing a water retention agent, a swelling agent, an ammonium salt, water, and iron. Additionally, in the mixed granule of the present invention, iron is more preferably dispersed throughout the entire mixed granule. The oxygen scavenger composition of the present invention may consist only of the mixed granule, but more preferably has a layer containing porous particles on an outside of the mixed granule.

By using such a mixed granule, iron is dispersed throughout the entire mixed granule, and iron and water are present in close proximity to each other. Thus, its reaction amount at an initial stage of an iron oxidation reaction is large. As a result, an oxygen absorption rate at the initial stage of the reaction is estimated to increase.

### (Water retention agent)

The water retention agent included in the oxygen scavenger composition of the present invention is a substance that is impregnated with water in its interior and can retain water without water seepage.

The water retention agent is not particularly limited as long as it can retain water, and generally available porous materials and highly water absorbing resins can be used. Examples of porous materials include diatomaceous earth, zeolite, sepiolite, cristobalite, porous glass, silica, activated clay, acid clay, activated carbon, vermiculite and wood flour. Examples of highly water absorbing resins include polyacrylate salt-based resins, polysulfonate salt-based resins, polyacrylamide-based resins, polyvinyl alcohol-based resins, starch-based resins, cellulose-based resins, and polyalginate-based resins. The water retention agent preferably contains at least one selected from the group consisting of diatomaceous earth, silica, and activated carbon. The water retention agents described above can be used alone, or two or more types thereof can be used in combination as necessary. Furthermore, commercially available products may be used as the water retention agents.

Among the water retention agents described above, activated carbon is particularly preferable because it has a function of promoting an oxidation reaction of iron in addition to the water retaining function. The type of activated carbon is not particularly limited, and may be any of wood-based, coconut shell, coal, and the like.

A property and a form of the water retention agent are not particularly limited, but a powder having a high fluidity is suitably used from the viewpoint of ease of handling during production of the oxygen scavenger, and its shape is more preferably close to spherical shape. Furthermore, the water retention agent has an average particle size of preferably 10 µm or more and 1000 µm or less, and more preferably 100 µm or more and 500 µm or less from the viewpoint of ease of handling during production of the oxygen scavenger. Any particles of the water retention agent can be used regardless of whether they are primary particles, agglomerated particles or granules, as long as the particles have a particle size in the range specified above. The water retention agents having a particle size in the range specified above can be used alone, or a plurality of types thereof having different particle sizes can be mixed at any ratio.

A content of the water retention agent in the oxygen scavenger composition is not particularly limited, but is preferably 10 mass% or more and 40 mass% or less, and more preferably 15 mass% or more and 30 mass% or less. In addition, the content of the water retention agent is preferably 20 parts or more by mass and 300 parts or less by mass, and more preferably 50 parts or more by mass and 200 parts or less by mass per 100 parts by mass of water. When the content of the water retention agent is within the range specified above, the oxygen scavenger composition can sufficiently retain water, and the amount of oxygen absorption per unit volume of the oxygen scavenger composition can be increased.

### (Swelling agent)

The swelling agent included in the oxygen scavenger composition of the present invention is a substance that undergoes swelling by moisture and has a binding function to retain the shape of the granule. The swelling agent is preferably used in a substantially dry state or a semi-swollen or swollen state, in which the swelling agent has absorbed water in an amount from a small amount to a required amount.

The swelling agent is not particularly limited as long as it is a commonly known swelling agent, and known swelling agents, binding agents, adhesives, and binders used in foods and the like can be used.

Examples of inorganic swelling agents include clay minerals such as sodium bentonite, calcium bentonite, and sodium montmorillonite. Examples of organic swelling agents include organic bentonite; natural products such as fat-free frozen bean curd, agar, starch, dextrin, gum arabic, gelatin, and casein; semi-synthetic products such as crystalline cellulose, carboxymethyl cellulose, carboxymethylcellulose sodium, carboxymethylcellulose calcium, hydroxyethyl cellulose, lignosulfonates, and hydroxyethyl starch; and synthetic products such as water insolubilized polyvinyl alcohol and polyvinyl methyl ether. The swelling agents described above can be used alone, or two or more types thereof can be used in combination as necessary. Furthermore, commercially available products may be used as the swelling agents.

Among the swelling agents, at least one selected from the group consisting of clay minerals and semi-synthetic products is preferred, and at least one selected from the group consisting of clay minerals and semi-synthetic cellulose products is more preferred.

Clay minerals are preferable because they are inexpensive and have excellent performance. Clay minerals are also known as inorganic soaps and have function as lubricants. In addition, a clay mineral, which has swollen with water, is known to exhibit a high thixotropy and is preferable because it also exhibits binding properties. In addition, the semi-synthetic cellulose product exhibits excellent swelling properties and is preferable. Among these, bentonites such as calcium bentonite and sodium bentonite, and carboxymethyl cellulose, carboxymethylcellulose sodium, carboxymethylcellulose calcium, and the like are preferable because of their low cost and strong binding power. The swelling agent contained in the oxygen scavenger composition of the present invention preferably contains at least one selected from the group consisting of carboxymethylcellulose calcium, carboxymethylcellulose sodium, calcium bentonite, and sodium bentonite.

The swelling agent has an average particle size of preferably 0.001 µm or more and 10 µm or less, and more preferably 0.01 µm or more and 1.0 µm or less from the viewpoint of suppressing generation of dust and the binding function.

A content of the swelling agent in the oxygen scavenger composition is not particularly limited, but is preferably 0.1 mass% or more and 20 mass% or less, and more preferably 1 mass% or more and 15 mass% or less. Furthermore, the content is preferably 1 part or more by mass and 15 parts or less by mass, and more preferably 3 parts or more by mass and 10 parts or less by mass, per 100 parts by mass of the iron. When the content of the swelling agent is within the range specified above, the oxygen scavenger composition can easily retain its shape. Additionally, a proportion of the water retention agent is not too small. Thus, an amount of moisture to be supplied to the iron does not decrease, and an amount of oxygen absorption tends to be higher.

### (Ammonium salt)

The ammonium salt contained in the oxygen scavenger composition of the present invention is a substance that catalytically acts on the oxidation reaction of the iron to improve the iron activity. The ammonium salt also serves to prevent vaporization of the water included in the oxygen scavenger composition and loss of the water from the oxygen scavenger composition. The detailed mechanism of the increased oxygen absorption rate due to the presence of the ammonium salt in the oxygen scavenger composition is unclear, but it is estimated that the surface of the oxygen scavenger becomes more acidic and the formation of an oxide film of the iron is less likely to occur because the ammonium salt is a salt of a strong acid and a weak base.

The ammonium salt is not particularly limited, but is preferably an ammonium salt of an inorganic acid.

Specific examples of the ammonium salt include ammonium halide salts, ammonium sulfate, ammonium hydrogen sulfate, ammonium phosphate, ammonium hydrogen phosphate, and ammonium dihydrogen phosphate.

The ammonium halide salts include ammonium chloride, ammonium fluoride, ammonium bromide, and ammonium iodide, and are preferably ammonium chloride and ammonium bromide.

Of these ammonium salts, the ammonium salt preferably contains at least one selected from the group consisting of ammonium halide and ammonium sulfate, more preferably contains at least one selected from the group consisting of ammonium chloride, ammonium bromide, and ammonium sulfate, and even more preferably is at least one selected from the group consisting of ammonium chloride and ammonium bromide, from the viewpoint of ease of handling, safety, and the like.

The ammonium salts can be used alone, or two or more types thereof can be used in combination as necessary. Furthermore, commercially available products may be used as the ammonium salts.

When an aqueous solution of the ammonium salt is used as a raw material, a concentration of the ammonium salt in the aqueous solution is preferably 5 mass% or more and 30 mass% or less, and more preferably 10 mass% or more and 20 mass% or less. When the salt concentration is 5 mass% or more, it is possible to suppress reduction of catalyzing action for iron oxidation. When the salt concentration is 30 mass% or less, it is possible to suppress reduction in vapor pressure of moisture. It is possible to suppress reduction in an amount of oxygen absorption due to insufficient supply of moisture to the iron.

A content of the ammonium salt in the oxygen scavenger composition is not particularly limited, but is preferably 0.5 mass% or more and 15 mass% or less, and more preferably 1 mass% or more and 10 mass% or less. Furthermore, the content is preferably 0.5 parts or more by mass and 20 parts or less by mass, and more preferably 2 parts or more by mass and 10 parts or less by mass, per 100 parts by mass of the iron.

### (Water)

From the viewpoint of the oxygen absorption performance of the iron-based oxygen scavenger, the oxygen scavenger composition of the present invention includes water. A content of the water in the oxygen scavenger composition is not particularly limited, but is preferably 10 mass% or more and 40 mass% or less, and more preferably 15 mass% or more and 30 mass% or less. Furthermore, from the viewpoint of the oxygen absorption performance, the content of the water is preferably 20 parts or more by mass and 50 parts or less by mass, and more preferably 25 parts or more by mass and 40 parts or less by mass, per 100 parts by mass of the iron.

### (Iron)

A form of the iron included in the oxygen scavenger composition of the present invention is not particularly limited, but is preferably in a form of an iron powder, from the viewpoint of the oxygen absorption performance, availability, and ease of handling. The iron powder is not particularly limited as long as the iron surface is exposed, and a reduced iron powder, an electrolytic iron powder, an atomized iron powder, or the like can be suitably used. Furthermore, a pulverized product or a cutting chip of cast iron or the like can also be used.

The iron powders can be used alone, or two or more types thereof can be used in combination as necessary. Furthermore, as these iron powders, commercially available products can also be easily obtained.

The iron powder has an average particle size of preferably 1000 µm or less, more preferably 500 µm or less, and even more preferably 200 µm or less from the viewpoint of improving contact with oxygen, and preferably 1 µm or more, more preferably 10 µm or more, and even more preferably 20 µm or more from the viewpoint of suppressing generation of dust. The particle size referred to herein refers to a particle size determined by the weight fractions in accordance with the mesh sizes of standard sieves after subjecting the particles to vibration for 5 minutes using the standard sieves conforming to ISO 3310-1:2000 (corresponding to JIS Z8801-1:2006).

Furthermore, from the viewpoint of the oxygen absorption capacity, a specific surface area of the iron powder is preferably 0.05 m²/g or more and more preferably 0.1 m²/g or more. The specific surface area of the iron powder can be determined by the BET multipoint method.

The oxygen scavenger composition of the present invention includes iron as its main agent. A content of the iron in the oxygen scavenger composition is preferably 40 mass% or more and 90 mass% or less, preferably 45 mass% or more and 80 mass% or less, and particularly preferably 50 mass% or more and 70 mass% or less.

### <Mixed granule>

The oxygen scavenger composition of the present invention contains a water retention agent, a swelling agent, an ammonium salt, water, and iron, and preferably contains a mixed granule of a composition containing a water retention agent, a swelling agent, an ammonium salt, water, and iron.

Here, in an embodiment of the present invention, "granulation" refers to an operation of processing raw material powders including a single or multiple components, by mixing the raw material powders using a binding agent or the like, into larger particles than the raw material powder, with a reduced presence ratio of fine powder as compared with that in a state of the raw material powder. "Granule" refers to a powdery/granular material obtained by the granulating operation. The granule is processed into a larger particle than the raw material powder, with a reduced presence ratio of fine powder as compared with that in a state of the raw material powder. The mixed granule of the present invention is not a pressure-molded product. That is, the granule included in the oxygen scavenger composition of the present invention can be conveniently produced at a low cost by simply mixing without performing pressure molding. It is thought that, since the mixed granule is not a pressure-molded product, a space exists in the mixed granule, making the contact between oxygen and iron easy, which thus can contribute to improving the oxygen absorption rate.

Additionally, in the mixed granule of the present invention, iron is preferably dispersed throughout the entire mixed granule.

A content of the mixed granule in the oxygen scavenger composition of the present invention is preferably 90 mass% or more, more preferably 95 mass% or more, even more preferably 98 mass% or more, and even more preferably substantially 100 mass%.

### (Porous particles)

The oxygen scavenger composition of the present invention may consist only of the mixed granule or may have a layer containing porous particles on an outside of the mixed granule.

The porous particles that can be used in an embodiment of the present invention are not particularly limited as long as they have a form of porous state. Here, "porous" refers to a state of a material where the material contains a large number of pores observable by an electron microscope, on its surface and interior. The porous particles can be a porous material used in the water retention agent described above as appropriate, and are preferably silica. Silica refers to a material that includes silicon dioxide (SiO₂) as its main component. The use of the silica increases a bulk density of the obtained powdery/granular material, and the amount of oxygen absorption.

The porous particles adhere to a surface of the mixed granule and absorb moisture that has oozed out from the mixed granule to improve fluidity of the mixed granule. When a particle size of the porous particles is larger than that of the mixed granule, the porous particles are hard to adhere to the mixed granule. From this viewpoint, the porous particles have an average particle size of preferably 0.5 mm or less, more preferably 0.3 mm or less, and even more preferably 0.1 mm or less.

The silica is not particularly limited, and examples thereof include hydrophobic silica, wet silica, dry silica, silica gel, diatomaceous earth, acid clay, activated clay, pearlite, kaolin, talc, and bentonite. The porous particles described above can be used alone, or two or more types thereof can be used in combination as necessary. As these porous particles, commercially available products can also be easily obtained.

When the oxygen scavenger composition of the present invention has a layer containing porous particles, a content of the porous particles in the layer containing the porous particles is preferably 30 mass% or more, more preferably 50 mass% or more, and even more preferably 80 mass% or more.

When the oxygen scavenger composition of the present invention has a layer containing porous particles, a content of the porous particles in the oxygen scavenger composition is preferably 0.1 mass% or more and 5 mass% or less, and more preferably 0.5 mass% or more and 3 mass% or less. When the content of the porous particles is within this range, a bulk density of the oxygen scavenger composition increases, and the amount of oxygen absorption readily increases. Additionally, fluidity of the oxygen scavenger composition is improved, thereby improving the ease of handling of the oxygen scavenger package during manufacture.

### <Shape of oxygen scavenger composition>

A shape of the oxygen scavenger composition of the present invention is not particularly limited, and examples include spherical, substantially spherical, elliptical, and cylindrical. The shape is preferably substantially spherical or spherical, and more preferably spherical, from the viewpoint of its tendency to improve filling properties and to increase the bulk density.

The oxygen scavenger composition of the present invention has an average particle size of preferably 0.3 mm or more and 5.0 mm or less, and more preferably 0.5 mm or more and 2.0 mm or less. When the average particle size is 0.3 mm or more, the oxygen scavenger composition is less likely to be deposited onto a powdery/granular material contact portion of a packaging machine due to static electricity or the like during filling and packaging. When the average particle size is 5.0 mm or less, the gap between the powdery/granular materials is less likely to become too large, thereby suppressing the reduction in amount of oxygen absorption per unit volume. The oxygen scavenger composition having an average particle size within the range specified above can be obtained, for example, through sieving using, for example, a sieve having openings of 0.3 mm and 2 mm. The average particle size can be measured by, for example, a commercially available laser diffraction/scattering type particle size distribution measuring device ("LA-960", available from Horiba, Ltd.).

The bulk density of the oxygen scavenger composition of the present invention is not particularly limited, but is preferably 1.0 g/mL or more, more preferably 1.3 g/mL or more, and even more preferably 1.5 g/mL or more. When the bulk density is 1.0 g/mL or more, the amount of oxygen absorption per unit volume tends to be superior. Also, it is practically 2.5 g/mL or less. An oxygen scavenger composition having a bulk density within the range specified above can be obtained, for example, by separating out those having a target bulk density using, for example, a specific gravity classifier (such as "High Speed Aspirator", available from Tokyo Seifunki Mfg. Co., Ltd.). The bulk density can be measured in accordance with JIS Z8901.

### [Method for producing oxygen scavenger composition]

The method for producing an oxygen scavenger composition of the present invention is not particularly limited, but the production is preferably performed by the following method.

A suitable method for producing an oxygen scavenger composition of the present invention includes collectively mixing a water retention agent, a swelling agent, an ammonium salt, water, and iron for granulation.

In the production method of the present invention, a mixed granule is prepared by mixing a water retention agent, a swelling agent, an ammonium salt, water, and iron until they are uniformly dispersed, and thus an oxygen scavenger composition can be prepared efficiently.

In addition, the production method of the present invention makes it possible to obtain an oxygen scavenger composition containing a mixed granule of a composition containing a water retention agent, a swelling agent, an ammonium salt, water, and iron, which is the preferred oxygen scavenger composition described above. Further, the mixed granule contained in the oxygen scavenger composition of the present invention can be conveniently produced at a low cost by simply mixing without performing pressure molding.

A mixing device is not particularly limited, and, as specific examples, a Nauta mixer (available from Hosokawa Micron Corporation), a conical mixer (available from Ono Kagaku Kikai K.K.), a vertical granulator (available from Powrex corp.), a high speed mixer (available from EARTHTECHNICA Co., Ltd.), and a granulator (available from AKIRAKIKO Co., Ltd.) can be used.

Examples of a method for producing an oxygen scavenger composition having a layer containing porous particles can include: a method for preparing an oxygen scavenger composition by mixing the mixed granule and hydrophobic silica and forming a layer containing porous particles on an outside of the mixed granule; and a method for preparing an oxygen scavenger composition by adding hydrophobic silica to the mixed granule, mixing them, and forming a layer containing porous particles on an outside of the mixed granule.

Since iron, which is a main agent of the oxygen scavenger, reacts with oxygen, the reaction with oxygen progresses gradually even in the absence of water, an ammonium salt, or the like. Therefore, it is preferable to perform the mixing in an inert atmosphere (in a case where a substantially sealed system is used, the system is normally under a reductive atmosphere without oxygen), and to take a heat removal means as appropriate.

### [Oxygen scavenger package]

The oxygen scavenger package of the present invention includes the oxygen scavenger composition described above and an air-permeable packaging material in which the oxygen scavenger composition is contained.

### (Packaging material)

Examples of the packaging material include: a packaging material having a bag shape formed by bonding two sheets of an air-permeable packaging material to each other; a packaging material having a bag shape formed by bonding one sheet of an air-permeable packaging material and one sheet of a non-air-permeable packaging material to each other; and a packaging material having a bag shape formed by folding one sheet of an air-permeable packaging material and sealing edges except the folded portion.

Here, when the air-permeable packaging material and the non-air-permeable packaging material each have a quadrilateral shape, examples of the packaging material include: a packaging material having a bag shape formed by overlapping two sheets of an air-permeable packaging material and heat-sealing their four sides; a packaging material having a bag shape formed by overlapping one sheet of an air-permeable packaging material and one sheet of a non-air-permeable packaging material and heat-sealing their four sides; and a packaging material having a bag shape formed by folding one sheet of an air-permeable packaging material and heat-sealing its three sides except the folded portion. Furthermore, the packaging material may be a packaging material having a bag shape formed by forming an air-permeable packaging material into a tubular shape and heat-sealing both ends and the trunk portion of the resulting tubular body.

### (Air-permeable packaging material)

As the air-permeable packaging material, a packaging material through which oxygen and carbon dioxide permeates is selected. Of these, a packaging material having an air permeability resistance of 600 seconds or less, more preferably 90 seconds or less by a Gurley tester method is suitably used. Here, the air permeability resistance refers to a value measured by a method in accordance with JIS P 8117 (1998). More specifically, it refers to a time period required for 100 mL of air to permeate through an air-permeable packaging material using a Gurley densometer available from Toyo Seiki Seisaku-sho, Ltd.

As the air-permeable packaging material, in addition to paper and nonwoven fabric, a plastic film, to which air permeability is imparted, is used. Examples of such a plastic film include a laminate film obtained by laminating and bonding a film of polyethylene terephthalate, polyamide, polypropylene, polycarbonate, or the like, and a film of polyethylene, an ionomer, polybutadiene, ethylene acrylic acid copolymer, ethylene methacrylate copolymer, ethylene vinyl acetate copolymer, or the like as a sealing layer. These laminates can also be used as the air-permeable packaging material.

As the method of imparting air permeability, various methods can be employed, in addition to punching with a cold needle or a heat needle. When air permeability is imparted by punching, the air permeability can be freely adjusted by a diameter, the number, a material, and the like of holes to be punched.

The thickness of the laminated film is preferably from 50 to 300 µm, and particularly preferably from 60 to 250 µm. In this case, as compared to a case where the thickness deviates from the range described above, the packaging material can be a packaging material that retains strength and has an excellent heat sealing property and packaging suitability.

### Examples

Hereinafter, the present embodiment will be described in detail using Examples and Comparative Examples, but the present embodiment can be modified as appropriate as long as the present embodiment achieves the effects of the present invention. Note that "parts" in Examples and Comparative Examples refer to parts by mass when not specifically stated.

### (Average particle size of oxygen scavenger composition)

The average particle size of the oxygen scavenger composition was measured by a laser diffraction/scattering type particle size distribution measuring device ("LA-960", available from Horiba, Ltd.).

### (Bulk density of oxygen scavenger composition)

The bulk density (unit: g/mL) of the oxygen scavenger composition was measured in accordance with JIS Z8901.

### (Method for producing oxygen scavenger composition)

### Example 1

To a high speed mixer ("SPG20L", available from EARTHTECHNICA Co., Ltd.), 1100 parts of diatomaceous earth ("CG-2U", available from Isolite Insulating Products Co., Ltd.), 1100 parts of activated carbon ("S-W50", available from Futamura Chemical Co., Ltd.), 200 parts of calcium bentonite ("Neokuni Bond", available from Kunimine Industries Co., Ltd.), 2220 parts of carboxymethylcellulose sodium ("F350HC-4", available from Nippon Paper Chemicals Co., Ltd.), an aqueous ammonium chloride solution, in which 400 parts of ammonium chloride had been dissolved in 2000 parts of water, and 6000 parts of an iron powder (average particle size: 100 µm) were added, and mixed for 3 minutes to obtain a mixed granule.

Furthermore, 70 parts of surface-treated silica ("SS-30P", available from Tosoh Silica Corporation) was added to the mixed granule, and they were mixed for 30 seconds to obtain an oxygen scavenger composition in which a porous particle layer was formed on an outside of the mixed granule. The average particle size of the resulting oxygen scavenger composition was 0.95 mm.

### Example 2

An oxygen scavenger composition was obtained in the same manner as in Example 1 except that 410 parts of ammonium chloride was changed to 410 parts of ammonium bromide. The average particle size of the resulting oxygen scavenger composition was 0.95 mm.

### Example 3

An oxygen scavenger composition was obtained in the same manner as in Example 1 except that 410 parts of ammonium chloride was changed to 410 parts of ammonium sulfate. The average particle size of the resulting oxygen scavenger composition was 0.83 mm.

### Comparative Example 1

To a high speed mixer ("SPG20L", available from EARTHTECHNICA Co., Ltd.), 1240 parts of diatomaceous earth ("CG-2U", available from Isolite Insulating Products Co., Ltd.), 1120 parts of activated carbon ("S-W50", available from Futamura Chemical Co., Ltd.), 225 parts of calcium bentonite ("Neokuni Bond", available from Kunimine Industries Co., Ltd.), and 20 parts of carboxymethylcellulose sodium ("F350HC-4", available from Nippon Paper Chemicals Co., Ltd.) were added, and mixed for 30 seconds. Next, an aqueous sodium chloride solution, in which 400 parts of sodium chloride had been dissolved in 2000 parts of water, was added over 30 seconds while mixing, and then they were mixed for another 60 seconds to obtain a powdery/granular material that was a raw material for an α layer (powdery/granular material inner layer).

Next, 6000 parts of an iron powder (average particle size 100 µm) were added to the powdery/granular material, and they were mixed for 3 minutes to obtain a powdery/granular material (α layer/β layer) in which a β layer (powdery/granular material outer layer) was formed on an outside of the powdery/granular material as the raw material of the α layer.

Furthermore, 110 parts of surface-treated silica ("SS-30P", available from Tosoh Silica Co., Ltd.) was added to the powdery/granular material, and they were mixed for 30 seconds to obtain an oxygen scavenger composition including a powdery/granular material (α layer/β layer/γ layer) in which a γ layer (porous particle layer) was formed on the outside of the powdery/granular material (α layer/β layer). The average particle size of the resulting oxygen scavenger composition was 0.9 mm.

### (Amount of oxygen absorption of oxygen scavenger composition)

The amount of oxygen absorption of the oxygen scavenger composition produced in each of the Examples and the Comparative Example was measured by the following method, and the oxygen absorption rate was evaluated.

An oxygen scavenger (oxygen scavenger package) was obtained by filling the oxygen scavenger composition produced in each of the Examples and the Comparative Example, in an amount of 0.8 g each, into a bag-shaped packaging material made of a composite film having outer dimensions of 45 mm × 46.5 mm. As the composite film, a composite film including a 50 g/m² water-resistant and oil-resistant paper and a heat welding layer made from a perforated polyethylene film having a thickness of 25 µm, and having a Gurley air permeability of 400 seconds/100 mL of air was used. A sealed bag containing an oxygen scavenger, in which 1500 mL of air was enclosed, was prepared for each of the Examples and the Comparative Example. Each of the sealed bags was stored at room temperature (25°C), the concentration (%) of oxygen in the sealed bag was measured using a zirconia oxygen thickness meter (CheckMate3, available from MOCON Europe) after the elapse of 2 hours and 4 hours, respectively, and the amount of oxygen absorption was calculated from the amount of oxygen concentration decreased. Table 1 shows the amount (mL) of oxygen absorption per unit mass (g) of the oxygen scavenger composition of each of the Examples and the Comparative Example.

### [Table 1]

**Table 1**

| | Ammonium salt or metal salt | Amount of oxygen absorption (mL/g) | |
|---|---|---|---|
| | | After 2 hours | After 4 hours |
| Example 1 | Ammonium chloride | 100.2 | 105.2 |
| Example 2 | Ammonium bromide | 98.8 | 119.1 |
| Example 3 | Ammonium sulfate | 75.8 | 75.8 |
| Comparative Example 1 | Sodium chloride | 53.7 | 73.6 |

As is clear from Table 1, the oxygen scavenger compositions of the Examples using an ammonium salt have a large amount of oxygen absorption in a short period of time. In particular, it can be seen that they have a significantly large amount of oxygen absorption after 2 hours and an extremely high oxygen absorption rate. That is, it can be seen that the oxygen scavenger compositions of the Examples can absorb oxygen within a sealed container in a short period of time.

## Claims

1. An oxygen scavenger composition comprising a water retention agent, a swelling agent, an ammonium salt, water, and iron.

2. The oxygen scavenger composition according to claim 1, wherein the ammonium salt contains at least one selected from the group consisting of ammonium halide and ammonium sulfate.

3. The oxygen scavenger composition according to claim 1 or 2, wherein the water retention agent contains at least one selected from the group consisting of diatomaceous earth, silica, and activated carbon.

4. The oxygen scavenger composition according to any one of claims 1 to 3, wherein the swelling agent contains at least one selected from the group consisting of carboxymethylcellulose calcium, carboxymethylcellulose sodium, calcium bentonite, and sodium bentonite.

5. The oxygen scavenger composition according to any one of claims 1 to 4, wherein the oxygen scavenger composition comprises a mixed granule of a composition that comprises a water retention agent, a swelling agent, an ammonium salt, water, and iron.

6. The oxygen scavenger composition according to claim 5, wherein the oxygen scavenger composition has a layer containing porous particles on an outside of the mixed granule.

7. The oxygen scavenger composition according to claim 5 or 6, wherein the mixed granule is not a pressure-molded product.

8. The oxygen scavenger composition according to any one of claims 5 to 7, wherein iron is dispersed throughout the entire mixed granule.

9. The oxygen scavenger composition according to any one of claims 1 to 8, wherein the oxygen scavenger composition has an average particle size of 0.3 mm or more and 5.0 mm or less.

10. The oxygen scavenger composition according to any one of claims 1 to 9, wherein the oxygen scavenger composition has a bulk density of 1.0 g/mL or more and 2.5 g/mL or less.

11. The oxygen scavenger composition according to any one of claims 1 to 10, wherein the oxygen scavenger composition has a substantially spherical or spherical shape.

12. The oxygen scavenger composition according to any one of claims 2 to 11, wherein the ammonium halide contains at least one selected from the group consisting of ammonium chloride and ammonium bromide.

13. A method for producing an oxygen scavenger composition, the method comprising collectively mixing a water retention agent, a swelling agent, an ammonium salt, water, and iron for granulation.

14. An oxygen scavenger package comprising the oxygen scavenger composition according to any one of claims 1 to 12 and an air-permeable packaging material in which the oxygen scavenger composition is contained.
